# EUROPÄISCHE PATENTSCHRIFT

(11) **EP 3 253 987 B1**
(45) Veröffentlichungstag und Bekanntmachung des Hinweises auf die Patenterteilung: **03.06.2020**
(21) Anmeldenummer: 16711122.8
(22) Anmeldetag: 28.01.2016
(51) Int. Cl.: F16F 15/12

(54) **DREHSCHWINGUNGSDÄMPFER**
TORSIONAL VIBRATION DAMPER
AMORTISSEUR DE VIBRATIONS DE TORSION

(30) Priorität: 04.02.2015 DE 102015201886
(43) Veröffentlichungstag der Anmeldung: 13.12.2017
(73) Patentinhaber: Schaeffler Technologies AG & Co. KG, 91074 Herzogenaurach (DE)
(72) Erfinder: ALMERT, Peter, 77871 Erlach (DE)
(86) Internationale Anmeldenummer: PCT/DE2016/200051
(87) Internationale Veröffentlichungsnummer: WO 2016/124185

(56) Entgegenhaltungen:
- DE-A1- 10 052 780
- DE-A1-102009 016 640
- GB-A- 2 148 455
- US-A1- 2012 234 131

## Beschreibung

Die Erfindung betrifft einen Drehschwingungsdämpfer, insbesondere für eine Doppelkupplung im Antriebsstrang eines Kraftfahrzeugs.

Drehschwingungsdämpfer, auch Torsionsschwingungsdämpfer genannt, sind im Stand der Technik vielfältig bekannt. Dabei sind beispielsweise solche Drehschwingungsdämpfer bekannt geworden, die als so genannte Zweimassenschwungräder bezeichnet werden. Diese weisen eine Primärschwungmasse und eine Sekundärschwungmasse auf, die relativ zueinander verdrehbar gelagert sind, wobei zwischen der Primärschwungmasse und der Sekundärschwungmasse ein Federdämpfer mit Bogenfedern vorgesehen ist, so dass die Primärschwungmasse entgegen der Rückstellkraft des Federdämpfers relativ zur Sekundärschwungmasse verdrehbar ist. Solche Drehschwingungsdämpfer benötigen allerdings relativ viel Bauraum und können daher nicht in jeden Bauraum eingepasst werden.

Auch zeigt sich bei der Anwendung von Zweimassenschwungrädern, dass diese in spezifischen Betriebssituationen nicht optimal zur Drehschwingungsdämpfung beitragen könnten, insbesondere beim Motorstart, beim Motorstopp oder im Leerlauf, weil die Primärschwungmasse relativ zur Sekundärschwungmasse zu störenden Schwingungen neigen könnte.

Das Dokument US 2012/234131 wird als nächstliegender Stand der Technik betrachtet.

Es ist die Aufgabe der vorliegenden Erfindung, einen Drehschwingungsdämpfer zu schaffen, welcher gegenüber dem Stand der Technik verbessert ist und störende Schwingungsanregungen reduziert oder ausgeschlossen werden.

Die Aufgabe der Erfindung zum Drehschwingungsdämpfer wird mit den Merkmalen von Anspruch 1 gelöst.

Ein Ausführungsbeispiel der Erfindung betrifft einen Drehschwingungsdämpfer mit einer Primärschwungmasse und einer Sekundärschwungmasse, mit einer Federdämpfereinrichtung, wobei die Primärschwungmasse entgegen der Rückstellkraft der Federdämpfereinrichtung relativ zur Sekundärschwungmasse verdrehbar gelagert ist, wobei ein Mittel zum steuerbaren formschlüssigen Verbinden der Primärschwungmasse mit der Sekundärschwungmasse vorgesehen ist. Dadurch kann ein Formschluss zwischen der Primärschwungmasse und der Sekundärschwungmasse betriebspunktabhängig geschaltet werden, so dass in gewissen Betriebszuständen der Formschluss geschaltet werden kann und der Federdämpfer so blockiert werden kann, was ungünstige Schwingungen von Primärschwungmasse zur Sekundärschwungmasse unterbunden werden können.

Besonders vorteilhaft ist es, wenn die Primärschwungmasse eine Tasche ausbildet, in welche die Federn der Federdämpfereinrichtung angeordnet sind und die Federn an der Tasche in Umfangsrichtung abgestützt sind, wobei die Sekundärschwungmasse einen Flansch aufweist, welcher in die Tasche eingreift und der Flansch sich ebenso an den Federn der Federdämpfereinrichtung in Umfangsrichtung abstützt. Dadurch kann in einfacher Weise eine Verdrehung entgegen der Rückstellkraft der Federn der Federeinrichtung erfolgen.

Auch ist es vorteilhaft, wenn ein mit der Sekundärschwungmasse verbunden ausgebildetes Element in axialer Richtung verlagerbar ist, mittels welchem eine schaltbare formschlüssige Verbindung mit der Primärschwungmasse vornehmbar ist. Dadurch kann durch beispielsweise kraftbeaufschlagtes Verlagern das Schalten der Verbindung vorgenommen werden.

Alternativ ist es vorteilhaft, wenn ein mit der Sekundärschwungmasse verbunden ausgebildetes Element in axialer Richtung verformbar ist, mittels welchem eine schaltbare formschlüssige Verbindung mit der Primärschwungmasse vornehmbar ist. Dabei kann durch ein kraftbeaufschlagtes elastisches Verformen ein Schalten der Verbindung vorgenommen werden.

Auch ist es vorteilhaft, wenn die Primärschwungmasse ein erstes Formschlusselement aufweist und das Element der Sekundärschwungmasse ein zweites Formschlusselement aufweist, wobei das erste und das zweite Formschlusselement zur formschlüssigen Verbindung zwischen Primärschwungmasse und Sekundärschwungmasse miteinander verbindbar sind. Dadurch werden die formschlüssige Verbindung und das Blockieren des Federdämpfers auf eine einfach steuerbare Weise realisiert.

Besonders vorteilhaft ist es, wenn das erste Formschlusselement eine Verzahnung der Primärschwungmasse ist und dass das zweite Formschlusselement eine Verzahnung des Elements der Sekundärschwungmasse ist. Diese Verzahnungen können einfach beispielsweise in ein Blech- oder Gusselement eingearbeitet werden.

Auch ist es zweckmäßig, wenn die Verzahnung der Primärschwungmasse eine Innenverzahnung oder eine Außenverzahnung ist und dass die Verzahnung des Elements der Sekundärschwungmasse eine Außenverzahnung oder eine Innenverzahnung ist. Entsprechend kann eine Verzahnung gebildet werden, so dass die Primärschwungmasse einfach mit der Sekundärschwungmasse formschlüssig verbunden werden kann.

Weiterhin ist es zweckmäßig, wenn die Primärschwungmasse einen radial innen angeordneten Absatz aufweist, welcher die Innen- oder Außenverzahnung trägt. Dadurch kann die Verzahnung einfach mit der Primärschwungmasse verbunden ausgebildet sein.

Erfindungsgemäß ist ein Druckstück vorgesehen, mittels welchem die formschlüssige Verbindung schaltbar ist. Mit diesem kann dann die Betätigung bzw. Schaltung der formschlüssigen Verbindung vorgenommen werden und weiterhin ist zwischen der Primärschwungmasse und einem verlagerbaren oder verformbaren Element der Sekundärschwungmasse ein Kraftspeicher, wie insbesondere eine Tellerfeder angeordnet, so dass die formschlüssige Verbindung entgegen der Rückstellkraft des Kraftspeichers mittels des Druckstücks bewirkbar ist.

Die vorliegende Erfindung wird nachfolgend anhand bevorzugter Ausführungsbeispiele in Verbindung mit den zugehörigen Figuren näher erläutert:

Dabei zeigt:

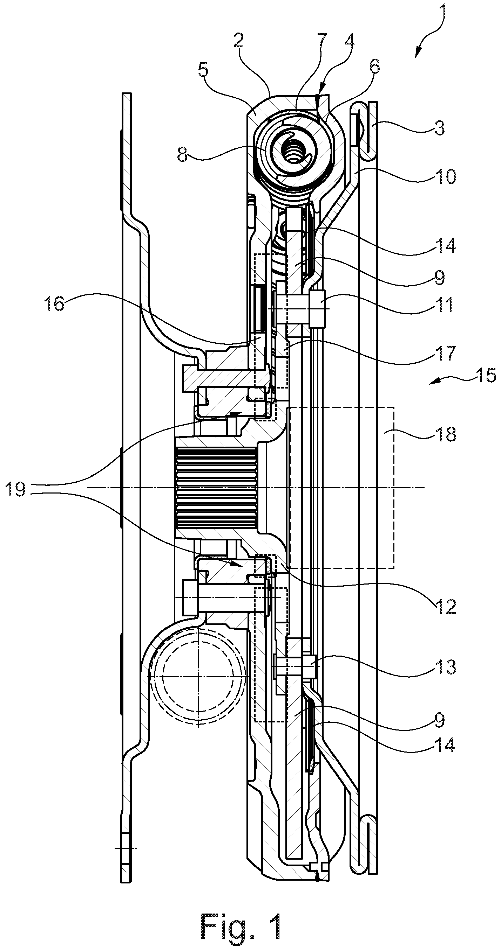

- Figur 1: eine schematische Darstellung eines erfindungsgemäßen Drehschwingungsdämpfers in einem Schnitt.

Die Figur 1 zeigt einen Drehschwingungsdämpfer 1 mit einer Primärschwungmasse 2 und mit einer Sekundärschwungmasse 3. Der Drehschwingungsdämpfer 1 weist eine Federdämpfereinrichtung 4 auf, welche im Drehmomentfluss zwischen der Primärschwungmasse 2 und der Sekundärschwungmasse 3 angeordnet ist und ein Drehmoment von der Primärschwungmasse 2 und der Sekundärschwungmasse 3 übertragt. Die Primärschwungmasse 2 ist bevorzugt entgegen der Rückstellkraft der Federdämpfereinrichtung 4 relativ zur Sekundärschwungmasse 3 verdrehbar gelagert. Hierzu ist vorteilhaft ein Wälzlager oder ein Gleitlager vorgesehen.

Gemäß Figur 1 bildet die die Primärschwungmasse 2 eine Tasche 7 aus, welche durch den radial außen liegenden Bereich des Scheibenelements 5 und des Scheibenelements 6 gebildet wird. In die Tasche 7 ist zumindest eine Feder 8 aufgenommen, welche in der Tasche 7 in Umfangsrichtung abgestützt ist. In die Tasche 7 greift von radial innen nach radial außen ein Flansch 9 ein, der mit der Sekundärschwungmasse 3 verbunden ist. Der Flansch 9 greift dabei vorzugsweise zwischen zwei Federn 8 ein und stützt sich so an zwei Federn 8 an ihren Endbereichen ab. Verdreht sich die Primärschwungmasse 2 relativ zur Sekundärschwungmasse 3, so stützt sich der Flansch 9 an den Federn 8 ab und beaufschlagt diese entsprechend der gegebenen Verdrehrichtung.

Mit dem Flansch 9 ist ein Scheibenelement 10 mittels zumindest eines Nietelements 11 verbunden ausgebildet. Radial innen ist mit dem Flansch 9 eine Nabe 12 für eine Getriebeeingangswelle verbunden, wobei auch diese Verbindung mittels eines Nietelements 13 erfolgt. Dabei kann das Nietelement 11 und das Nietelement 13 das gleiche Nietelement sein oder es können unterschiedliche Nietelemente 11, 13 vorgesehen sein, um das Scheibenelement 10 und die Nabe 12 zu verbinden. Dabei ist das Scheibenelement 10 in radialer Richtung nach außen ausgerichtet und teilweise benachbart zu dem Scheibenelement 6 der Primärschwungmasse 2 angeordnet. Zwischen diesen beiden Scheibenelementen 6, 10 ist weiterhin eine Abdeckscheibe 14 vorgesehen, welche sich radial außen an dem Scheibenelement 6 abstützt und welche sich radial innen an dem Scheibenelement 10 abstützt und welches im Wesentlichen radial ausgerichtet ist.

Zwischen der Primärschwungmasse 2 und der Sekundärschwungmasse 3 oder einem damit verbundenen Element, wie beispielsweise mit dem Flansch 9 sind Mittel 15 zum steuerbaren formschlüssigen Verbinden der Primärschwungmasse 2 mit der Sekundärschwungmasse 3 vorgesehen.

Diese Mittel 15 umfassen ein mit der Sekundärschwungmasse verbunden ausgebildetes Element, das in axialer Richtung verlagerbar ist oder das in axialer Richtung elastisch verformbar ist. Dieses kann beispielsweise der Flansch 9 sein. Durch die Verlagerung des Elements wird eine schaltbare formschlüssige Verbindung zwischen der Sekundärschwungmasse 3 und der Primärschwungmasse 2 vorgesehen.

Dabei weist die Primärschwungmasse 2 ein erstes Formschlusselement 16 auf und das Element der Sekundärschwungmasse 3 weist ein zweites Formschlusselement 17 auf, wobei das erste und das zweite Formschlusselement 16, 17 zur formschlüssigen Verbindung zwischen Primärschwungmasse 2 und Sekundärschwungmasse 3 miteinander verbindbar sind. Dabei kann die formschlüssige Verbindung vorliegen und eingeschaltet sein oder nicht vorliegen und abgeschaltet sein.

Gemäß der Erfindung ist das erste Formschlusselement 16 eine Verzahnung der Primärschwungmasse. Auch ist das zweite Formschlusselement 17 vorteilhafterweise eine Verzahnung des Elements der Sekundärschwungmasse 3. Dabei ist es vorteilhaft, wie in Figur 1 gezeigt, wenn das zweite Formschlusselement 17 eine Verzahnung des Flanschs 9 ist.

So kann die Verzahnung der Primärschwungmasse 2 eine Innenverzahnung oder eine Außenverzahnung sein und es kann die Verzahnung des Elements der Sekundärschwungmasse 3 entsprechend eine Außenverzahnung oder eine Innenverzahnung sein. Dabei ist die Primärschwungmasse 2 vorteilhaft mit einem radial innen angeordneten Absatz ausgebildet, welcher die Innen- oder Außenverzahnung trägt. Die jeweiligen Verzahnungen sind dabei vorteilhaft auf gleicher radialer Höhe angeordnet. Die Verzahnung ist dabei derart ausgebildet, dass ein leichtes Schalten der formschlüssigen Verbindung erfolgt und ein sicherer Formschluss auch ohne große Anpresskraft erreichbar ist.

Zur Betätigung der formschlüssigen Verbindung ist ein Druckstück 18 vorgesehen, mittels welchem die formschlüssige Verbindung schaltbar ist. Dazu drückt das Druckstück 18 auf das Element, wie beispielsweise den Flansch 9, der Sekundärschwungmasse 3 oder auf die Sekundärschwungmasse 3 selbst und beaufschlagt diese oder dieses in Richtung auf die Primärschwungmasse 2.

Damit diese formschlüssige Verbindung nicht dauerhaft geschaltet bleibt, ist zwischen der Primärschwungmasse 2 und dem verlagerbaren oder verformbaren Element der Sekundärschwungmasse 3 ein Kraftspeicher 19 angeordnet, welche eine Kraft auf Primärschwungmasse und Sekundärschwungmasse ausübt, die voneinander weg gerichtet ist. Dieser Kraftspeicher 19 ist dabei vorzugsweise eine Tellerfeder, die sich an dem Element der Sekundärschwungmasse und an der Primärschwungmasse abstützt. Dieser Kraftspeicher 19 ist in Figur 1 radial innen im Bereich der Nabe 12 angeordnet. Der Kraftspeicher 19, wie die Tellerfeder, wirkt dabei entgegen des Druckstücks 18 zum Schalten der formschlüssigen Verbindung. Bei unbetätigtem Druckstück 18 dient der Kraftspeicher 19 dazu, die formschlüssige Verbindung zu öffnen.

Das Druckstück 18 ist vorzugsweise als Teil eines Betätigungselements ausgebildet, das zumindest ähnlich eines Ausrücklagers ausgebildet ist und das Druckstück in axialer Richtung verlagern kann. Dabei ist das ähnlich einem Ausrücklager ausgebildete Betätigungselement vorzugsweise in einer Glocke eines Getriebes angeordnet.

### Bezugszeichenliste

- 1: Drehschwingungsdämpfer
- 2: Primärschwungmasse
- 3: Sekundärschwungmasse
- 4: Federdämpfereinrichtung
- 5: Scheibenelement
- 6: Scheibenelement
- 7: Tasche
- 8: Feder
- 9: Flansch
- 10: Scheibenelement
- 11: Nietelement
- 12: Nabe
- 13: Nietelement
- 14: Abdeckscheibe
- 15: Mittel
- 16: Formschlusselement
- 17: Formschlusselement
- 18: Druckstück
- 19: Kraftspeicher

## Patentansprüche

1. Drehschwingungsdämpfer (1) mit einer Primärschwungmasse (2) und einer Sekundärschwungmasse (3), mit einer Federdämpfereinrichtung (4), wobei die Primärschwungmasse (2) entgegen der Rückstellkraft der Federdämpfereinrichtung (4) relativ zur Sekundärschwungmasse (3) verdrehbar gelagert ist, wobei ein Mittel (15) zum steuerbaren formschlüssigen Verbinden der Primärschwungmasse (2) mit der Sekundärschwungmasse (3) vorgesehen ist, wobei weiterhin ein Druckstück (18) vorgesehen ist, mittels welchem die formschlüssige Verbindung schaltbar ist, **dadurch gekennzeichnet ist, dass** zwischen der Primärschwungmasse (2) und einem verlagerbaren oder verformbaren Element der Sekundärschwungmasse ein Kraftspeicher (19), wie insbesondere eine Tellerfeder angeordnet ist, so dass die formschlüssige Verbindung entgegen der Rückstellkraft des Kraftspeichers (19) mittels des Druckstücks (18) bewirkbar ist.

2. Drehschwingungsdämpfer (1) nach Anspruch 1, **dadurch gekennzeichnet, dass** die Primärschwungmasse (2) eine Tasche (7) ausbildet, in welche die Federn (8) der Federdämpfereinrichtung (4) angeordnet sind und die Federn (8) an der Tasche (7) in Umfangsrichtung abgestützt sind, wobei die Sekundärschwungmasse (3) einen Flansch (9) aufweist, welcher in die Tasche (7) eingreift und der Flansch (9) sich ebenso an den Federn (8) der Federdämpfereinrichtung (4) in Umfangsrichtung abstützt.

3. Drehschwingungsdämpfer (1) nach Anspruch 1 oder 2, **dadurch gekennzeichnet, dass** das mit der Sekundärschwungmasse (3) verbunden ausgebildetes Element in axialer Richtung verlagerbar ist, mittels welchem eine schaltbare formschlüssige Verbindung mit der Primärschwungmasse (2) vornehmbar ist.

4. Drehschwingungsdämpfer (1) nach Anspruch 1 oder 2, **dadurch gekennzeichnet, dass** das mit der Sekundärschwungmasse (3) verbunden ausgebildetes Element in axialer Richtung verformbar ist, mittels welchem eine schaltbare formschlüssige Verbindung mit der Primärschwungmasse (2) vornehmbar ist.

5. Drehschwingungsdämpfer (1) nach einem der vorhergehenden Ansprüche 3 oder 4, **dadurch gekennzeichnet, dass** die Primärschwungmasse (2) ein erstes Formschlusselement (16) aufweist und das Element der Sekundärschwungmasse (3) ein zweites Formschlusselement (17) aufweist, wobei das erste und das zweite Formschlusselement (16,17) zur formschlüssigen Verbindung zwischen Primärschwungmasse (2) und Sekundärschwungmasse (3) miteinander verbindbar sind.

6. Drehschwingungsdämpfer (1) nach Anspruch 5, **dadurch gekennzeichnet, dass** das erste Formschlusselement (16) eine Verzahnung der Primärschwungmasse (2) ist und dass das zweite Formschlusselement (17) eine Verzahnung des Elements der Sekundärschwungmasse (3) ist.

7. Drehschwingungsdämpfer (1) nach Anspruch 6, **dadurch gekennzeichnet, dass** die Verzahnung der Primärschwungmasse (2) eine Innenverzahnung oder eine Außenverzahnung ist und dass die Verzahnung des Elements der Sekundärschwungmasse (3) eine Außenverzahnung oder eine Innenverzahnung ist.

8. Drehschwingungsdämpfer (1) nach Anspruch 7, **dadurch gekennzeichnet, dass** die Primärschwungmasse (2) einen radial innen angeordneten Absatz aufweist, welcher die Innen- oder Außenverzahnung trägt.

## Claims

1. A torsional vibration damper (1) with a primary flywheel mass (2) and a secondary flywheel mass (3), with a spring damper device (4), wherein the primary flywheel mass (2) is rotationally mounted relative to the secondary flywheel mass (3) counter to the restoring force of the spring damper device (4), wherein means (15) for controlling a form-locking connection of the primary flywheel mass (2) to the secondary flywheel mass (3) are provided, wherein a pressure piece (18) is also provided, by means of which the form-locking connection can be switched, **characterised in that**, between the primary flywheel mass (2) and a displaceable or deformable element of the secondary flywheel, a force accumulator (19), in particular a plate spring, is arranged such that the positive connection can be effected counter to the restoring force of the force accumulator (19) by means of the pressure piece (18).

2. The torsional vibration damper (1) according to claim 1, **characterised in that** the primary flywheel mass (2) forms a pocket (7) in which the springs (8) of the spring damper device (4) are arranged and the springs (8) on the pocket (7) are supported in the circumferential direction, wherein the secondary flywheel mass (3) has a flange (9) which engages in the pocket (7) and the flange (9) is also supported in the circumferential direction on the springs (8) of the spring damper device (4).

3. The torsional vibration damper (1) according to claim 1 or 2, **characterised in that** the element connected to the secondary flywheel mass (3) is displaceable in the axial direction, by means of which a switchable form-locking connection to the primary flywheel mass (2) can be made.

4. The torsional vibration damper (1) according to claim 1 or 2, **characterised in that** the element connected to the secondary flywheel mass (3) is deformable in the axial direction, by means of which a switchable form-locking connection to the primary flywheel mass (2) can be made.

5. The torsional vibration damper (1) according to any one of the preceding claims 3 or 4, **characterised in that** the primary flywheel mass (2) has a first form-locking element (16) and the element of the secondary flywheel mass (3) has a second form-locking element (17), wherein the first and the second form-locking elements (16, 17) for the form-locking connection between the primary flywheel mass (2) and the secondary flywheel mass (3) can be connected to one another.

6. The torsional vibration damper (1) according to claim 5, **characterised in that** the first form-locking element (16) is a toothing of the primary flywheel mass (2) and that the second form-locking element (17) is a toothing of the element of the secondary flywheel mass (3).

7. The torsional vibration damper (1) according to claim 6, **characterised in that** the toothing of the primary flywheel mass (2) is an internal toothing or an external toothing and that the toothing of the element of the secondary flywheel mass (3) is an external toothing or an internal toothing.

8. The torsional vibration damper (1) according to claim 7, **characterised in that** the primary flywheel mass (2) has a radially inner shoulder which carries the internal or external toothings.

## Revendications

1. Amortisseur de vibrations de torsion (1) comprenant une masse centrifuge primaire (2) et une masse centrifuge secondaire (3), comprenant un dispositif amortisseur à ressort (4), la masse centrifuge primaire (2) étant montée rotative par rapport à la masse centrifuge secondaire (3) contre la force de rappel du dispositif amortisseur à ressort (4), un moyen (15) servant à la liaison par complémentarité de forme à commande de la masse centrifuge primaire (2) à la masse centrifuge secondaire (3), en outre une pièce de pression (18) servant également à établir la liaison par complémentarité de forme, **caractérisé en ce qu'** est disposé entre la masse centrifuge primaire (2) et un élément mobile ou déformable de la masse centrifuge secondaire, un accumulateur de force (19), en particulier un ressort à lame de manière ce que la pièce de pression (18) établisse la liaison par complémentarité de forme contre la force de rappel de l'accumulateur de force (19).

2. Amortisseur de vibrations de torsion (1) selon la revendication 1, **caractérisé en ce que** la masse centrifuge primaire (2) forme une poche (7) dans laquelle sont disposés les ressorts (8) du dispositif amortisseur à ressort (4) et les ressorts (8) sur la poche (7) sont supportés dans la direction circonférentielle, la masse centrifuge secondaire (3) présentant une bride (9) qui vient en prise dans la poche (7) et la bride (9) est également supportée dans la direction circonférentielle sur les ressorts (8) du dispositif amortisseur à ressort (4).

3. Amortisseur de vibrations de torsion (1) selon la revendication 1 ou 2, **caractérisé en ce que** l'élément relié à la masse centrifuge secondaire (3) peut être déplacé dans la direction axiale pour établir une liaison par complémentarité de forme à commande avec la masse centrifuge primaire (2).

4. Amortisseur de vibrations de torsion (1) selon la revendication 1 ou 2, **caractérisé en ce que** l'élément relié à la masse centrifuge secondaire (3) peut se déformer dans la direction axiale pour établir une liaison par complémentarité de forme à commande avec la masse centrifuge primaire (2).

5. Amortisseur de vibrations de torsion (1) selon l'une des revendications 3 ou 4 précédentes, **caractérisé en ce que** la masse centrifuge primaire (2) présente un premier élément à complémentarité de forme (16) et l'élément de la masse centrifuge secondaire (3) présente un second élément à complémentarité de forme (17), le premier et le second élément à complémentarité de forme (16, 17) pouvant être reliés l'un à l'autre pour établir une liaison par complémentarité de forme entre la masse centrifuge primaire (2) et la masse centrifuge secondaire (3).

6. Amortisseur de vibrations de torsion (1) selon la revendication 5, **caractérisé en ce que** le premier élément à complémentarité de forme (16) est une denture de la masse centrifuge principale (2) et que le second élément à complémentarité de forme (17) est une denture de l'élément de la masse centrifuge secondaire (3).

7. Amortisseur de vibrations de torsion (1) selon la revendication 6, **caractérisé en ce que** la denture de la masse centrifuge primaire (2) est une denture intérieure ou une denture extérieure et que la denture de l'élément de la masse centrifuge secondaire (3) est une denture extérieure ou une denture intérieure.

8. Amortisseur de vibrations de torsion (1) selon la revendication 7, **caractérisé en ce que** la masse centrifuge primaire (2) présente un épaulement radialement intérieur qui porte la denture intérieure ou extérieure.
